Europäisches Patentamt

European Patent Office

Office européen des brevets

(11) Numéro de publication: **0 347 327**
**A2**

## DEMANDE DE BREVET EUROPEEN

(21) Numéro de dépôt: **89401692.2**

(22) Date de dépôt: **16.06.89**

(51) Int. Cl.⁴: **C 03 B 9/193**

(30) Priorité: **17.06.88 FR 8808187**

(43) Date de publication de la demande:
**20.12.89 Bulletin 89/51**

(84) Etats contractants désignés:
**AT BE CH DE ES FR GB IT LI NL SE**

(71) Demandeur: **SAINT-GOBAIN EMBALLAGE**
**Les Miroirs 18, Avenue d'Alsace**
**F-92400 Courbevoie (FR)**

(72) Inventeur: **Arrault, Jacques**
**4, allée Edouard Degas**
**F-77170 Brie-Comte-Robert (FR)**

(74) Mandataire: **Eudes, Marcel et al**
**Saint-Gobain Recherche 39 Quai Lucien Lefranc**
**F-93304 Aubervilliers Cedex (FR)**

(54) Récipients pressés-soufflés de large ouverture et leur fabrication.

(57) L'invention a pour objet des récipients pressés-soufflés de forme plate, d'une hauteur (H) inférieure à 100 mm mais d'ouverture (b) comprise entre 105 et 130 mm.

Ces récipients sont particulièrement adaptés au conditionnement de produits alimentaires, en particulier de plats cuisinés.

Le dispositif de pressage de leur ébauche comprend un moule et un poinçon coopérant avec un mécanisme de chargement placé à l'intérieur de son carter porteur, mais qui coulisse dans une rehausse montée au dessus de ce carter.

Fig. 1

EP 0 347 327 A2

**Description**

## RÉCIPIENTS PRESSÉS-SOUFFLÉS DE LARGE OUVERTURE ET LEUR FABRICATION

Il est connu de fabriquer par pressage des plats ou autres récipients en verre de large ouverture exempts de contre-dépouilles internes. Ce procédé procure un aspect général satisfaisant et s'il ne permet pas d'obtenir des cadences très élevées, il est bien adapté à la fabrication de ce genre de produits, dont le marché est limité.

La plupart des articles de grande consommation exigent moins de régularité d'aspect et l'on accepte en particulier des "coutures" le long de génératrices des parois latérales ; mais ils présentent usuellement des contre-dépouilles internes. C'est le cas des bouteilles, mais aussi des pots, malgré leur goulot plus large, car on cherche à obtenir le plus faible encombrement à capacité donnée.

Ces récipients ont une forme profonde et leur diamètre modéré permet en règle générale de les saisir latéralement d'une seule main ; c'est dire qu'il n'excède guère 100 mm.

On recourt donc normalement aux procédés dits soufflé-soufflé, ou mieux pressé-soufflé dès que l'ouverture interne du goulot le permet. Ces derniers procédés, le second en particulier, procurent la planéité de bague nécessaire à la bonne qualité du bouchage de récipients destinés en particulier à conditionner des produits alimentaires à conservation sous vide, conserves ou semi-conserves ; ils sont aussi beaucoup plus économiques car il permettent d'atteindre des cadences très élevées, en particulier si l'on travaille en multiple paraison c'est-à dire en moulant plusieurs articles côte à côte à chaque poste.

Il en résulte toutefois pour eux un degré de normalisation qui en exclut les produits spéciaux ; les machines sont ainsi formées de sections disposées en parallèle, dessinées de façon à atteindre couramment des ouvertures de l'ordre de 90 mm, plus exceptionnellement et en simple paraison, des ouvertures maximales de 105 mm c'est-à-dire des diamètres de contre-bague de l'ordre de 115 mm.

L'invention a pour objet de proposer des récipients du type pressé-soufflé, possédant une forme plate mais d'ouverture élargie, à saisir verticalement, à savoir entre leur fond et leur bord supérieur. Ils auront donc une hauteur inférieure à 100 mm mais leur ouverture dépassera 105 et même 120 mm pour aller jusqu'à 130 mm, avec un diamètre de contre-bague maximal de l'ordre de 140 mm. Il s'agira en particulier de récipients à contre-dépouille interne.

Selon une deuxième caractéristique, la hauteur de ces récipients sera au plus égale à la moitié de la plus grande de leurs dimensions latérales. Leur capacité pourra varier de 250 à 1000 cm$^3$ environ, ce qui permet en particulier de conditionner des rations individuelles alimentaires et en particulier des plats cuisinés, dans un emballage étanche permettant de les consommer directement à table grâce à sa forme d'écuelle ou de terrine d'assez large ouverture. Les proportions choisies se sont en outre révélées intéressantes par le gain de temps obtenu lors de la stérilisation.

Le recours à un récipient en pressé-soufflé conduit ainsi à un avantage économique suffisant pour autoriser la fabrication en grande série. Dans le cadre des limitations exposées plus haut, la mise en oeuvre du procédé est en effet rendue possible par le choix même de la forme plate qui vient d'être décrite. Une description détaillée du mode d'adaptation des outillages de la machine, en référence aux figures, permettra de s'en rendre compte.

Ces figures représentent :
- figure 1 : un plat individuel selon l'invention,
- figure 2 : un schéma général du procédé pressé-soufflé,
- figure 3 : le schéma d'un mécanisme de pressage,
- figure 4 : un dispositif de pressage selon l'invention.

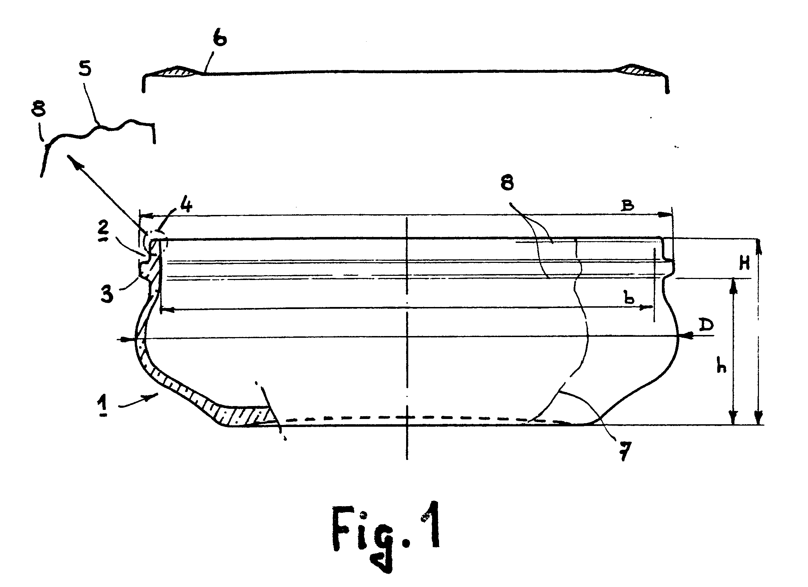

Le plat représenté par la figure 1 possède un corps renflé 1 d'un diamètre D de 130 mm ; sa bague 2 possède une ouverture interne b de 117 mm pour un diamètre B de la contre-bague 3 de 125 mm et sa hauteur hors-tout H ne dépasse pas 45 mm, avec une hauteur h sous bague de 35 mm pour une capacité de 450 cm$^3$ correspondant au volume normal de nombreuses portions individuelles de plats cuisinés. Son buvant 4 porte deux nervures d'étanchéité 5 ; il est apte à recevoir un couvercle 6. Extérieurement et de façon classique deux coutures latérales 7 se raccordent à des coutures horizontales 8.

Il a été indiqué plus haut dans quelles limites il est possible d'augmenter les dimensions ci-dessus par adaptation des machines : à titre d'exemple, un plat de 150 mm de diamètre et 66 mm de hauteur aura une capacité de 850 cm$^3$.

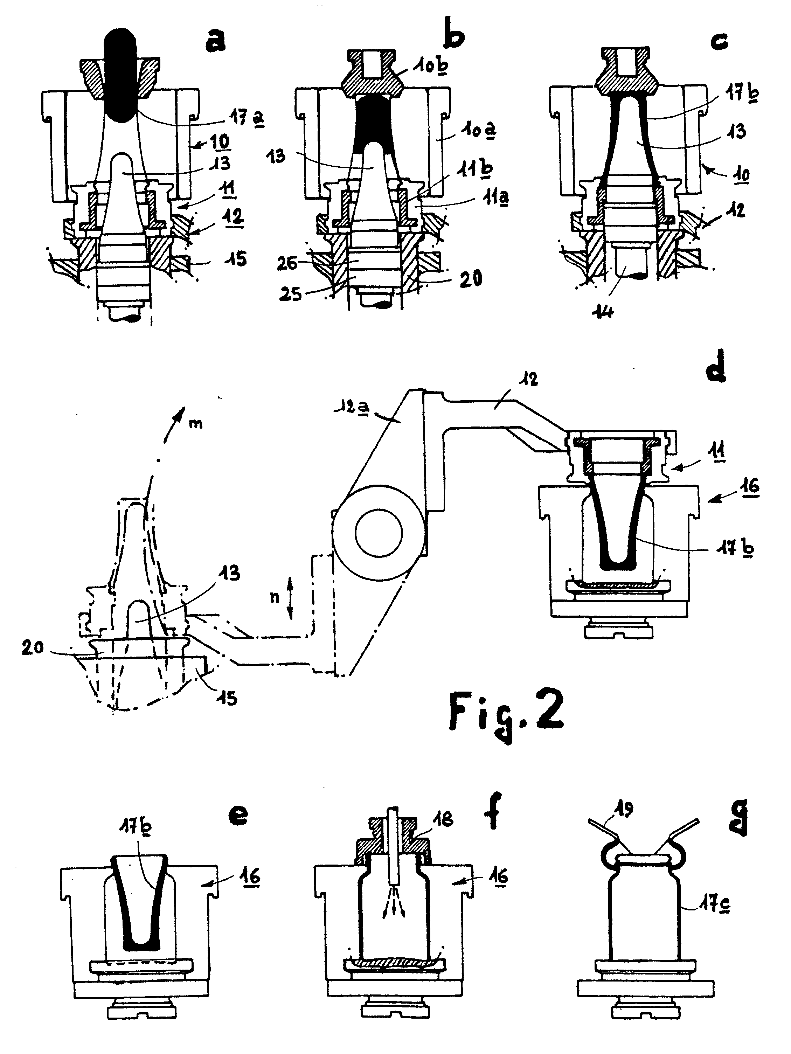

On sait que le procédé pressé-soufflé comprend deux grandes étapes dont les vues de la figure 2 résument les phases principales :

Le pressage s'effectue dans un ébaucheur 10 comprenant deux demi-coquilles 10a portées par une charnière non représentée et qui enferment un moule de bague 11 présenté par un bras 12 ; à la partie inférieure se trouve un poinçon 13 porté par le mécanisme d'un vérin 14 logé dans le bâti 15 de la machine. Le moule 11 est formé de deux demi-bagues 11a glissant sur un anneau-guide 11b. Le soufflage s'effectue dans un moule finisseur 16, de structure comparable à celle de l'ébaucheur, mais plus simple.

Une paraison 17a est d'abord introduite dans la cavité de l'ébaucheur, dont le poinçon ferme l'orifice inférieur (phase a). Après mise en place d'un fond 10b, la montée du poinçon provoque le pressage (phase b). Une fois ce dernier achevé (phase c), le poinçon recule tandis que, perpendiculairement au plan de figure, la charnière de l'ébaucheur s'ouvre suffisamment pour dégager le moule 11 porteur de l'ébauche 17b.

Lorsque le poinçon se trouve assez effacé, le bras 12 peut basculer (flèche m) en renversant l'ébauche pour la placer sur le finisseur (phase d) : cette manoeuvre exige que le poinçon vienne dans une position plus basse que lors du chargement. On notera que le bras 12 s'ajuste en hauteur (flèche n) sur une console 12a.

Après avoir lâché l'ébauche par écartement des demi-coquilles du moule 11, le bras 12 revient à vide à sa position initiale ; l'ébauche, reposant simplement sur le finisseur 16 par sa contre-bague (phase e), est coiffée d'une tête 18 qui la maintient et permet par soufflage d'amener le verre à la forme définitive (phase f). L'article 17c peut enfin, après ouverture du moule 16, être évacué par une pince 19 (phase g).

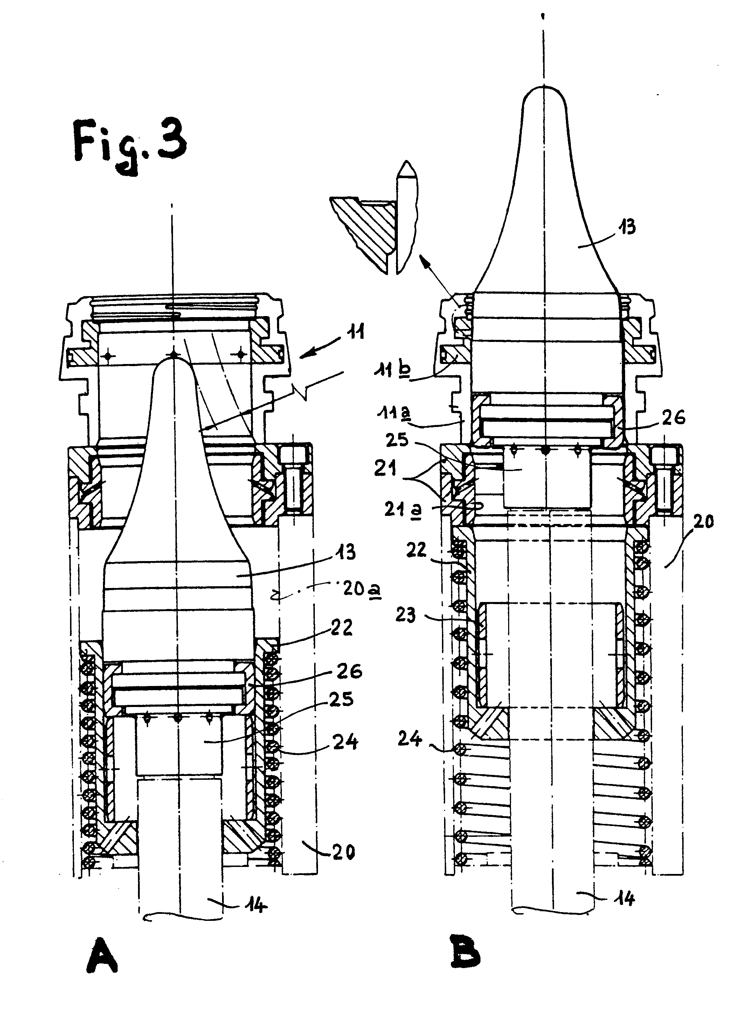

La structure d'un dispositif de pressage classique apparaît plus complètement sur la figure 3, qui le représente dans les deux positions extrêmes du poinçon 13, basse sur la vue A (phase d) et haute sur la vue B (phase c).

Le vérin 14, dont la tige apparaît seule sur la figure, est associé à un mécanisme dit de chargement, monté à l'intérieur de l'alésage 20a d'un carter prismatique 20 que ferme un couvercle 21 ; ce mécanisme est constitué d'une douille 22, porteuse d'une entretoise 23 et que repousse un ressort 24. La hauteur du carter par rapport au bâti 15 est ajustée au contact du moule de bague, sous l'extrémité du bras de transfert 12, tous deux en position d'autant plus basse que l'article donc aussi les moules et plus précisément le moule finisseur sont plus encombrants en hauteur.

Le poinçon 13, qu'il est inutile de décrire en détail, est monté sur un adaptateur 25 fixé à l'extrémité de la tige du vérin 14. Lors du transfert (phase d), tiré vers le bas par ce vérin, qui est à double effet, il se trouve logé dans la douille 22 qu'il repousse en butée basse par l'intermédiaire de l'entretoise 23 en comprimant le ressort 24 : comme le montre la vue A, il s'efface ainsi suffisamment pour permettre le mouvement du bras 12 porteur du moule de bague 11.

Aussitôt ce mécanisme revenu en position d'ébauchage, le vérin se met au repos : le ressort 24 fait alors remonter en butée haute la douille 22 porteuse du poinçon qui se trouve ainsi amené en position intermédiaire, s'engageant dans la bague 21a du couvercle 21 pour obturer le moule de bague ; ceci permet le chargement.

Ensuite et après fermeture complète de l'ébaucheur, la remontée du vérin 14 provoquera le pressage, le poinçon s'engageant alors entièrement dans le moule comme le montre la vue B avant de s'effacer à nouveau.

Ce sont deux demi-colliers 26 qui solidarisent le piston avec l'adaptateur 25 en lui permettant de se centrer ; grâce au mouvement de la douille 22, ils sont eux-mêmes constamment retenus dans un alésage.

Les machines sont constituées de plusieurs sections analogues à celle dont le fonctionnement vient d'être sommairement décrit et, rendues aussi compactes qu'il est possible de le faire sans interférences entre leurs très nombreux organes en mouvement, même les plus grosses ne permettent normalement pas de créer des ouvertures supérieures à 105 mm : en particulier l'alésage 20a, qu'il faudrait chemiser, ne dépasse pas 120 mm en simple paraison et il est pratiquement aussi impossible d'augmenter les dimensions du carter 20 sur le bâti 15 qu'il serait économiquement injustifié de construire une machine spécifique.

Pour la mise en oeuvre de l'invention, il a toutefois été constaté que certaines augmentations de diamètres pouvaient encore se faire sans provoquer d'interférences : dans la mesure où la hauteur de bague n'était pas excessive, le passage du moule de bague 11 ou de la tête de soufflage 18 obligeaient seulement à modifier de façon simple des organes du bras de transfert 12, sans que le passage de celui-ci, porteur de l'article en cours de fabrication, entre les mâchoires ouvertes de l'ébaucheur en particulier, ni le passage de la pince d'extraction 19, chargée à son tour, se trouvent ensuite gênés. Ceci permettrait de circonscrire la difficulté.

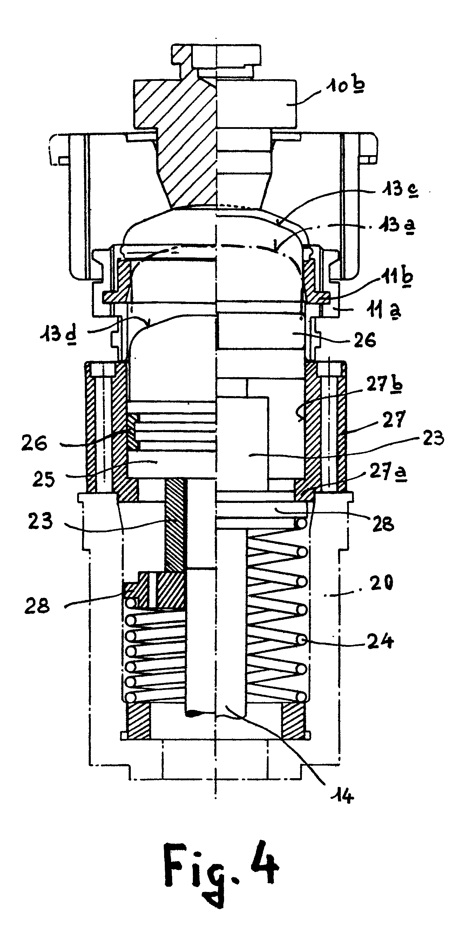

La figure 4 montre donc le dessin d'un mécanisme de pressage adaptable sur un carter classique et qui permet cependant, dans les limites de dimensions données, de former l'ébauche des plats décrits plus haut. La disposition adoptée profite de la réflexion que, tout en exigeant une position intermédiaire de chargement, la course nécessaire au pressage est suffisamment faible pour qu'il devienne possible de faire coulisser le poinçon non plus dans le carter 20 mais dans une rehausse placée au dessus, à condition d'abaisser la position d'ajustement de ce carter au lieu de la relever en liaison avec la faible hauteur de l'article ; pour un encombrement externe voisin de celui du carter, cette rehausse possédera un alésage supérieur à celui non seulement de la douille 22 décrite plus haut soit 90 mm mais au besoin à celui du carter lui-même soit 120 mm.

On voit sur la moitié gauche de la figure qu'en position basse 13d le poinçon et son adaptateur 25, solidarisés par les demi-colliers 26, trouvent place dans la seule rehausse 27 dont l'épaulement 27a fournit à leur course basse une butée directe ; dans l'exemple choisi le diamètre de l'alésage 27b n'est que de 119 mm mais on se rend compte qu'il pourrait encore être augmenté ainsi que celui du moule de bague 11. Ni ce dernier ni le carter 20 ne sont non plus en positions extrêmes respectivement haute et basse.

La position de chargement 13a du poinçon est fournie, toujours avec interposition d une entretoise 23, par une rondelle de poussée 28 placée à l'intérieur du carter 20 ; elle correspond à la butée haute de la rondelle sur l'épaulement 27a sous l'effet du ressort 24. La position haute de fin de pressage 13c, représentée sur la partie droite de la figure, fait apparaître, au delà de l'engagement du poinçon dans l'anneau-guide 11b, la forme de l'ébauche 17b.

## Revendications

1. Récipients du type pressé-soufflé, possédant une forme plate, d'une hauteur (H) inférieure à 100 mm mais d'ouverture (b) comprise entre 105 et 130 mm.

2. Récipients selon la revendication 1, caractérisés par une contre-dépouille interne.

3. Récipients selon l'une des revendications 1 et 2, caractérisés par une hauteur (H) au plus égale à la moitié de la plus grande de leurs dimensions latérales (D).

4. Application des récipients selon l'une des revendications 1 à 3 à la stérilisation de produits alimentaires, en particulier de plats cuisinés.

5. Dispositif pour le pressage d'ébauches de récipients sur une machine de pressé-soufflé, comprenant un moule (10,11) et un poinçon (13) repoussé en position haute de pressage par un vérin (14) associé à un mécanisme de chargement placé à l'intérieur d'un carter (20) de hauteur ajustable par rapport au bâti (15) de la machine, mécanisme mû jusqu'à butée haute par un ressort (24) qui amène le poinçon en position de chargement alors que, tiré vers le bas par le vérin, le poinçon s'efface en comprimant le ressort jusqu'à butée basse pour permettre le transfert au poste de finition, caractérisé en ce que le poinçon coulisse dans une rehausse (27) montée au dessus du carter et coopère avec le ressort (24) par l'intermédiaire d'une rondelle de poussée (28) placée à l'intérieur de ce carter.

6. Dispositif selon la revendication 5, caractérisé en ce que la rehausse possède un alésage supérieur à celui du carter.

7. Dispositif selon l'une des revendications 5 et 6, caractérisé par une double butée (27a) interposée entre la rondelle de poussée et le poinçon à la partie basse de la rehausse.

Fig. 1

Fig.2

# Fig.3

A

B

Fig. 4